# EUROPEAN PATENT APPLICATION

(11) **EP 4 667 340 A1**
(43) Date of publication of application: **24.12.2025**
(21) Application number: 25183038.6
(22) Date of filing: 16.06.2025
(51) Int. Cl.: B62K 7/04, B62K 19/46

(54) **VEHICLE AND STORAGE FRAME**

(30) Priority: 17.06.2024 JP 2024097154
(71) Applicant: Kawasaki Motors, Ltd., Akashi, Hyogo 673-8666 (JP)
(72) Inventor: UEDA, Kazuki, Akashi-shi, 6738666 (JP)
(74) Representative: Wenzel Nemetzade Warthmüller Patentanwälte Part mbB

(57) **Abstract**

A vehicle includes a front wheel, a rear wheel, a steering handle, a first head pipe, a storage frame 37, and a storage frame. A first steering shaft which rotates integrally with the steering handle is inserted into the first head pipe. The first head pipe is disposed so that a lower end thereof is located forward of an upper end thereof. The support frame supports the front wheel and the rear wheel. The storage frame 37 forms a storage space for storing luggage, and is at least partially detachable from the support frame.

## Description

### [Technical field]

The present application relates to vehicles for transporting luggage.

### [Background art]

Patent Document 1 is Japanese Patent Application Laid-Open No. 2023-087756.

Patent Document 1 discloses a three-wheeled bicycle having a luggage receiving portion that forms a luggage compartment. The luggage receiving portion is fixed to the down tube.

### [Summary of the Invention]

Generally, a vehicle is manufactured by a manufacturer and then transported to a dealer or a customer. A vehicle may be transported from a dealer or a customer to a manufacturer for repair or other purposes. It is preferable that the space required for transporting the vehicle is small. In this regard, Patent Document 1 does not disclose any configuration for reducing the space required for transporting a three-wheeled bicycle. This type of problem is not limited to three-wheeled bicycles, but is a problem common to all vehicles.

The present application has been made in view of the above circumstances, and a main object of the application is to provide a vehicle having a configuration for reducing a required space for transportation.

### [Means for solving the problem]

The problem to be solved by the present application is as described above. Next, the means for solving this problem and the effects thereof will be described.

According to an aspect of the present application, there is provided a vehicle having the following configuration. That is, the vehicle includes a front wheel, a rear wheel, a steering handle, a head pipe, a support frame, and a storage frame. A steering shaft that rotates integrally with the steering handle is inserted into the head pipe. The head pipe is disposed so that its lower end is located forward of its upper end. The support frame supports the front wheel and the rear wheel. The storage frame forms a storage space for storing luggage, and is at least partially detachable from the support frame.

### [Effect of the Invention]

According to the present application, a vehicle can be realized that is configured to reduce the space required for transportation.

### [Brief description of the drawings]

FIG. 1 is a side view of a vehicle according to a first embodiment.
FIG. 2 is a front view of a vehicle.
FIG. 3 is a perspective view of a storage frame.
FIG. 4 is a perspective view showing a state in which a placement portion is attached to a lower frame.
FIG. 5 is a cross-sectional view of a placement portion and a lower frame.
FIG. 6 is a perspective view showing a state where traveling direction standing wall portion is attached to a first head pipe.
FIG. 7 is a perspective view showing a state in which a left-right direction standing wall portion is attached.
FIG. 8 is a side view of a vehicle according to a second embodiment.
FIG. 9 is a perspective view of a storage frame according to a second embodiment.
FIG. 10 is a perspective view of a lower storage structure.
FIG. 11 is a perspective view of a upper storage structure.

### [Embodiment of invention]

Next, an embodiment of the present application will be described with reference to the drawings. In the following description, each direction of the vehicle 1 is defined as a direction seen by a driver riding in the vehicle 1 standing upright on a horizontal surface. Therefore, a front-rear direction corresponds to a vehicle length direction, and a left-right direction corresponds to a vehicle width direction. A vertical direction and an up-down direction corresponds to a height direction. In this description, terms such as parallel, perpendicular, and coincident include not only a state in which the meanings of these terms strictly hold, but also a state in which the meanings of these terms substantially hold (in other words, a state in which there is a slight difference).

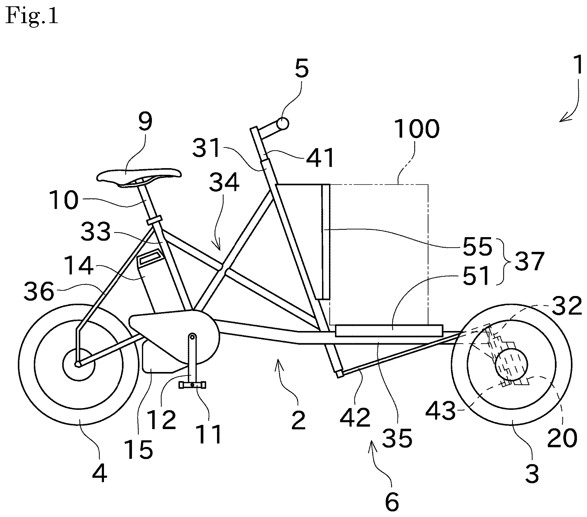

The vehicle 1 shown in FIG. 1 is a lean vehicle that inclines with respect to a road surface when turning or the like. However, the vehicle 1 may be a vehicle that does not lean when turning, such as a four-wheeled vehicle. The vehicle 1 is a vehicle on which a driver straddles, and vehicle 1 corresponds to a straddle vehicle. However, the vehicle 1 may be a vehicle other than a saddle-type vehicle, for example, a vehicle in which the driver sits.

The vehicle 1 runs using a force applied by the driver to pedals and a force generated by a motor. In particular, since the vehicle 1 of this embodiment is an electrically assisted bicycle, the motor generates power on the condition that the driver applies a force to the pedals.

The vehicle 1 is not limited to an electrically assisted bicycle. For example, the vehicle 1 may be a non-assisted electric bicycle. In this case, the motor of the vehicle 1 can generate power to run the vehicle 1 even when the driver is not applying force to the pedal. The vehicle 1 may be an electric vehicle. In this case, the pedals can be omitted from the vehicle 1, and a footrest or the like is provided instead of the pedals. The vehicle 1 may be a bicycle that is not of the electric type. In this case, the motor and the battery are omitted from the vehicle 1.

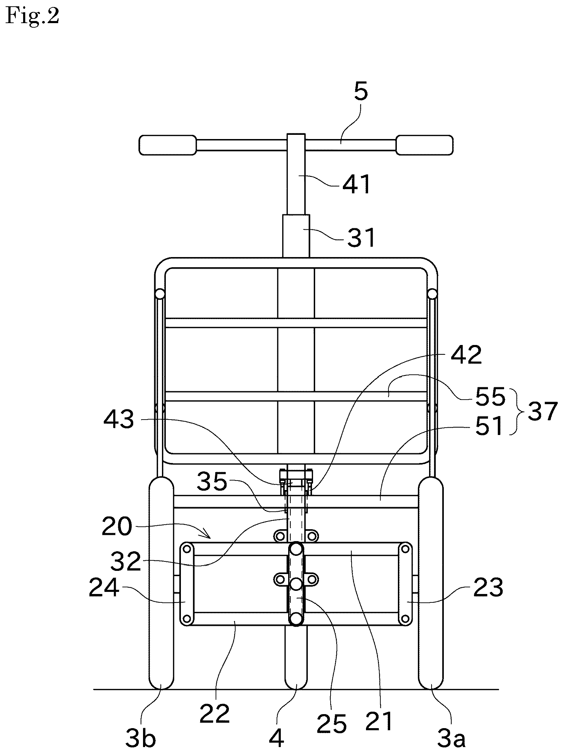

As shown in FIGS. 1 and 2, the vehicle 1 includes a support frame 2, a left front wheel 3a, a right front wheel 3b, and a rear wheel 4.

The support frame 2 is a structural member that forms the framework of the vehicle 1. Various components of the vehicle 1 are attached to the support frame 2. The support frame 2 is constructed by combining a plurality of frames in order to ensure the necessary rigidity. The support frame 2 will be described in detail later.

The left front wheel 3a, the right front wheel 3b, and the rear wheel 4 each include a wheel body and a tire attached to the wheel body. The left front wheel 3a corresponds to the "left wheel", and the right front wheel 3b corresponds to the "right wheel". Hereinafter, the left front wheel 3a and the right front wheel 3b may be collectively referred to as the front wheels 3. The vehicle 1 of this embodiment is a three-wheeled bicycle having two front wheels and one rear wheel. Alternatively, the vehicle 1 may be a three-wheeled bicycle with one front wheel and two rear wheels. In this case, the rear wheel on the left side corresponds to the "left wheel" and the rear wheel on the right side corresponds to the "right wheel". A parallel link mechanism and mounting member and the like, which will be described later, are disposed between the left rear wheel and the right rear wheel. The total number of front and rear wheels provided on the vehicle 1 is not limited to three, but may be two or four or more.

The left front wheel 3a is disposed on the left side of the center position of the vehicle width. The right front wheel 3b is disposed on the right side of the center position of the vehicle width. The left front wheel 3a and the right front wheel 3b are supported by the support frame 2 via a parallel link mechanism 20.

As shown in FIG. 2, the parallel link mechanism 20 includes an upper arm 21, a lower arm 22, a left arm 23, a right arm 24, and a central arm 25. The arms constituting the parallel link mechanism 20 are connected to form a square. The connected arms are capable of relative rotation at their respective connection positions. The upper arm 21 and the lower arm 22 are disposed vertically side by side. The left arm 23 and the right arm 24 are disposed side by side. The central arm 25 connects the central portion of the upper arm 21 and the central portion of the lower arm 22.

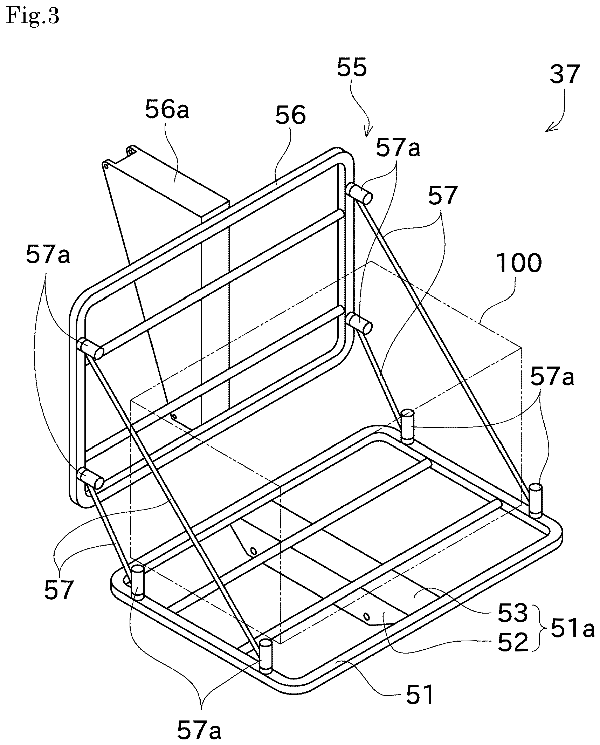

As shown in FIG. 2, when the vehicle 1 is upright on a horizontal surface, the longitudinal directions of the upper arm 21 and the lower arm 22 are parallel to the horizontal surface. When the vehicle 1 is upright on a horizontal surface, the longitudinal directions of the left arm 23 and the right arm 24 are parallel to the up-down direction. Therefore, the parallel link mechanism 20 has a rectangular shape. On the other hand, as shown in FIG. 3, when the vehicle 1 is leaned on the horizontal surface, the longitudinal directions of the upper arm 21 and the lower arm 22 are substantially parallel to the horizontal surface. If the height of the connection position between the left front wheel 3a and the left arm 23 is different from the height of the connection position between the right front wheel 3b and the right arm 24, the longitudinal directions of the upper arm 21 and the lower arm 22 may be inclined from the horizontal plane accordingly. When the vehicle 1 is leaned on the horizontal surface, the longitudinal directions of the left arm 23 and the right arm 24 are inclined with respect to the up-down direction. In other words, the longitudinal direction of the left arm 23 and the right arm 24 is parallel to the longitudinal direction of the left front wheel 3a and the right front wheel 3b when viewed from the front. The longitudinal direction of the left arm 23 and the right arm 24 is parallel to the longitudinal direction of the central arm 25. By using the parallel link mechanism 20, the left front wheel 3a and the right front wheel 3b can each be inclined relative to the road surface, while the support frame 2 can be tilted relative to the road surface. The parallel link mechanism 20 is detachable from the support frame 2. By removing the parallel link mechanism 20 from the support frame 2, the front wheels 3 are removed from the support frame 2. In other words, the front wheels 3 are also detachable from the support frame 2.

The front wheels 3 are steerable wheels, and the steering angle of the front wheels 3 changes in response to the driver's steering operation. The vehicle 1 is equipped with a steering handle 5 for steering. When the driver rotates the steering handle 5, the rotational force is transmitted to the front wheels 3 via a steering mechanism 6, which will be described later. As a result, the steering angle of the front wheels 3 changes.

A seat 9 for a driver to sit on is provided behind the steering handle 5. The seat 9 is connected to a seat post 10. The seat post 10 is attached to the support frame 2. The seat post 10 is disposed at an angle such that the upper end is located rearward of the lower end.

Pedals 11 are provided below the seat 9. The pedals 11 are disposed in a pair on the left and right. The driver sits in the seat 9, grips the steering handle 5 with his/her hands to steer, and drives the vehicle 1 by pedaling the pedals 11 with his/her feet.

A crank 12 is connected to the pedal 11. The crank 12 is rotatable about a crankshaft. The torque generated by pedaling the pedals 11 to rotate the crank 12 is transmitted to the rear wheel 4, which is the driving wheel, via the drive chain.

A battery 14 and a motor 15 are provided in the area between the front wheels 3 and the rear wheel 4 in the front-rear direction, more specifically, in the area rearward of the axle position of the front wheels 3 and forward of the axle position of the rear wheel 4.

The battery 14 stores power. The battery 14 is, for example, a combination of small cylindrical lithium ion rechargeable batteries. The battery 14 is not limited to a lithium-ion rechargeable battery, and other types of rechargeable batteries such as a nickel-metal hydride battery may be used. The battery 14 is not limited to a configuration in which a plurality of rechargeable batteries are combined. For example, a single rechargeable cell having a desired shape may be manufactured and used as the battery 14.

The battery 14 is fixed to the support frame 2 via a battery holder. By mounting the battery 14 on the battery holder, a terminal of the battery 14 is electrically connected to a conductor of the battery holder. The conductors of the battery holder are connected to the motor 15 via electric wires or the like that pass inside or outside the support frame 2. This allows power to be supplied from the battery 14 to the motor 15.

The motor 15 is fixed to the support frame 2 using fasteners such as bolts. The motor 15 has a motor body and a motor driver. A driving current is supplied from the motor driver to the motor body, causing the motor body to generate power. There are various types of motor 15, and for example, a brushed DC motor, a brushless DC motor, an AC servo motor, etc. can be used.

The force generated by the motor 15 is transmitted to the motor sprocket via a reduction gear. The chain meshes with a sprocket for the motor. This allows the rear wheel 4 to be driven using the power generated by the motor 15.

Next, the steering mechanism 6 will be described. In the following description, terms such as connecting, coupling, and attachment include not only a state in which two members are directly connected, but also a state in which two members are indirectly connected via another member.

As shown in FIG. 1, the steering mechanism 6 includes a first steering shaft 41, a first steering arm 42, and a second steering shaft 43.

The first steering shaft 41 is connected to the steering handle 5. The first steering shaft 41 is located rearward of the front wheel 3 in the front-rear direction. When the driver rotates the steering handle 5, the first steering shaft 41 rotates about its axial direction. Hereinafter, the force applied by the driver to the steering handle 5 will be referred to as the steering force. The first steering arm 42 is rotatably connected to the lower end of the first steering shaft 41.

The first steering arm 42 transmits the steering force received from the first steering shaft 41. Specifically, the pair of first steering arms 42 are provided on the left and right sides, and in response to the rotation of the first steering shaft 41, one of the first steering arms 42 moves forward and the other first steering arm 42 moves rearward. The second steering shaft 43 is rotatably linked to the front end of the first steering arm 42. In other words, the rear end of the first steering arm 42 is connected to the first steering shaft 41 at a position spaced apart in the left-right direction from the rotation axis of the first steering shaft 41. The front end of the first steering arm 42 is connected to the second steering shaft 43 at a position spaced apart in the left-right direction from the rotation axis of the second steering shaft 43. The front and rear ends of the first steering arm 42 are linked and connected to an extension portion extending in the left-right direction from the first steering shaft 41 so as to be able to move relatively.

The second steering shaft 43 transmits the steering force received from the first steering arm 42. In detail, the steering force of the two first steering arms 42 is transmitted to, for example, a rotating plate, and the steering force is transmitted to a second steering shaft 43 fixed to the rotating plate. The second steering shaft 43 is disposed in a position overlapping with the front wheels 3 in the front-rear direction. When the steering force is transmitted to the second steering shaft 43, the second steering shaft 43 rotates about its axial direction. A pair of second steering arms (not shown) are connected to the lower end of the second steering shaft 43. The pair of second steering arms use the steering force received from the second steering shaft 43 to push and pull the left front wheel 3a and the right front wheel 3b, respectively, to change the steering angle of the front wheel 3. As described above, the front wheels 3 are steered using the steering force applied by the driver to the steering handle 5.

The vehicle 1 of this embodiment has two steering shafts. Alternatively, the vehicle 1 may include only one steering shaft. For example, in a vehicle in which the steering handle 5 and the front wheels 3 overlap in the front-rear direction, the steering force can be transmitted from the steering handle 5 to the front wheels 3 even with one steering shaft.

Next, the support frame 2 will be described.

As shown in FIG. 1, the support frame 2 includes a first head pipe 31, a second head pipe 32, a seat tube 33, a reinforcing frame 34, a lower frame 35, a rear frame 36, and a storage frame 37.

The first head pipe 31 and the second head pipe 32 are members related to the steering mechanism 6. The first head pipe 31 and the second head pipe 32 are straight, cylindrical members. The first head pipe 31 is located rearward of the front wheel 3 in the front-rear direction. The first steering shaft 41 is inserted into the first head pipe 31. The first head pipe 31 is disposed so as to incline downward toward the front. In other words, the lower end of the first head pipe 31 is located forward of the upper end of the first head pipe 31. The orientation of the first steering shaft 41 is the same as the orientation of the first head pipe 31. The second head pipe 32 is positioned so as to overlap the front wheel 3 in the front-rear direction. The second steering shaft 43 is inserted into the second head pipe 32.

When the vehicle 1 has only one steering shaft, the support frame 2 also has only one head pipe. In other words, the number of head pipes provided on the support frame 2 is not limited to two. In the case where the support frame 2 is equipped with only one head pipe, the position of that head pipe in the front-rear direction overlaps with the position of the front wheel 3 in the front-rear direction.

The seat tube 33 is located in an area between the front wheel 3 and the rear wheel 4 in the front-rear direction, and in an area between the left front wheel 3a and the right front wheel 3b in the left-right direction. The seat post 10 is inserted into the seat tube 33. The seat tube 33 is a straight, cylindrical member.

The reinforcing frame 34 is a frame that is located in a range that includes the area between the first head pipe 31 and the seat tube 33 in the front-rear direction. The vehicle 1 of this embodiment includes a plurality of reinforcing frames 34. However, the vehicle 1 may be provided with one reinforcing frame 34, or the reinforcing frame 34 may be omitted if sufficient rigidity is ensured. The reinforcing frame 34 may be connected to the first head pipe 31 and the seat tube 33, or may be connected to a separate member.

The lower frame 35 is a frame that serves as the foundation of the vehicle 1. The lower frame 35 is a linear member having a rectangular cross section. The longitudinal direction of the lower frame 35 is parallel to the horizontal direction. The lower frame 35 is disposed below the center of the vehicle 1 in the up-down direction. More specifically, the lower frame 35 is disposed in a range including a position lower than the upper ends of the front wheels 3. The lower frame 35 extends in the front-rear direction. The front end of the lower frame 35 is positioned so as to overlap the front wheel 3 in the front-rear direction. The second head pipe 32 described above is connected to the front end of the lower frame 35. The front end of the lower frame 35 supports the front wheel 3 via the second head pipe 32 and the parallel link mechanism 20. The rear end of the lower frame 35 is connected to the lower end of the seat tube 33, a member supporting the crankshaft, or a member supporting the motor 15. The rear end of the lower frame 35 may be connected to the first head pipe 31.

The rear frame 36 is a frame that is located in an area that includes the rear of the seat tube 33 in the front-rear direction. The rear frames 36 are provided one each on the top and bottom.

The storage frame 37 is a frame that forms an storage space. The storage space is a space for storing luggage 100. The storage space may be a partitioned space surrounding the luggage 100, or may be a partially open space. For example, by opening the top, it becomes easier to put in and take out luggage 100. **In** this embodiment, the method of storing the luggage 100 is to place the luggage 100 on the floor, but the luggage 100 may also be suspended. The storage frame 37 is detachable from the first head pipe 31 and the lower frame 35. However, the storage frame 37 may be detachable from another frame of the support frame 2. For example, the storage frame 37 may be detachable from the rear frame 36. The storage frame 37 will be described in detail later.

The above-described support frame 2 is one example, and the shape of each member, the presence or absence of each frame, the number of each frame, or the function of each frame can be changed.

Next, the storage frame 37 will be described in detail with reference to FIG. 3 to FIG. 5. In the description of the components of the storage frame 37, "extending in the up-down direction" means that the longitudinal direction of the component includes a component of the up-down direction, and may include components other than the up-down direction. The same interpretation applies to directions other than up-down direction.

As shown in FIG. 3, the storage frame 37 includes a placement portion 51 and a standing wall portion 55. The outer end of the storage frame 37 in the vehicle width direction is located more outboard in the vehicle width direction than the outer end of the support frame 2 in the vehicle width direction (or the outer end of the seat 9 in the vehicle width direction). In this way, the storage frame 37 protrudes on both sides outside the vehicle width direction relative to the support frame 2, so that the luggage 100 stored in the storage space can be stably supported. The outer end of the storage frame 37 in the vehicle width direction is located more inward in the vehicle width direction than the outer end of the steering handle 5 in the vehicle width direction. The outer end of the storage frame 37 in the vehicle width direction is located outboard in the vehicle width direction of the outer ends of the upper and lower arms 21, 22 of the parallel link mechanism 20 in the vehicle width direction. The outer end of the storage frame 37 in the vehicle width direction is located outboard in the vehicle width direction of the inner ends of the pair of front wheels 3 in the vehicle width direction.

The placement portion 51 supports the lower part of the luggage 100 in a storage state where the luggage 100 is stored. The placement portion 51 has a structure in which a rectangular frame-shaped member is combined with a rod-shaped member extending in the left-right direction. However, the structure of the placement portion 51 in this embodiment can be modified. For example, the placement portion 51 may be a plate-like member having a rectangular shape or another shape.

The placement portion 51 extends in the left-right direction from a center position in the vehicle width direction. Specifically, as shown in FIG. 2, the placement portion 51 overlaps both the left front wheel 3a and the right front wheel 3b in a front view. Therefore, the storage space in this embodiment is large enough to fully utilize the size in the left-right direction of the vehicle 1. By disposing the storage frame 37 between the left front wheel 3a and the right front wheel 3b, the running stability can be improved compared to when the luggage 100 is loaded on the outside of the front wheels 3. By disposing the storage frame 37 between the rear end of the front wheel 3 and the front end of the rear wheel 4, driving stability can be improved compared to when luggage 100 is loaded on the outside of the wheels in the front-rear direction. The placement portion 51 is disposed below the upper ends of the left front wheel 3a and the right front wheel 3b in the height direction. This allows the center of gravity of the vehicle 1 to be lowered when the luggage 100 is loaded therein. The position or size of the placement portion 51 can be changed. In the case where the vehicle 1 is equipped with a left rear wheel 4 and a right rear wheel 4, the storage frame 37 (the placement portion 51) may be disposed between the left and right rear wheels 4.

An attachment-detachment mechanism 51a is fixed to the lower surface of the placement portion 51 by a fixing means such as welding. The attachment-detachment mechanism 51a includes a pair of left and right guide portions 52 and a connecting portion 53. The pair of left and right guide portions 52 and the connecting portion 53 may be formed by bending a single member, or may be formed by connecting the pair of left and right guide portions 52 and the connecting portion 53.

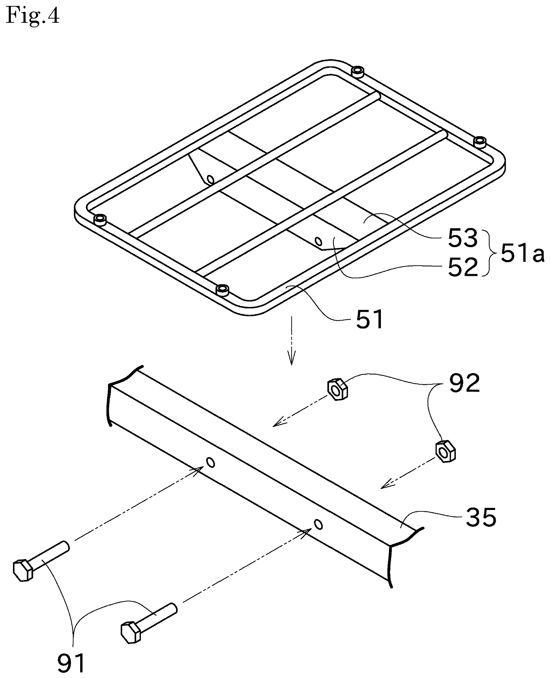

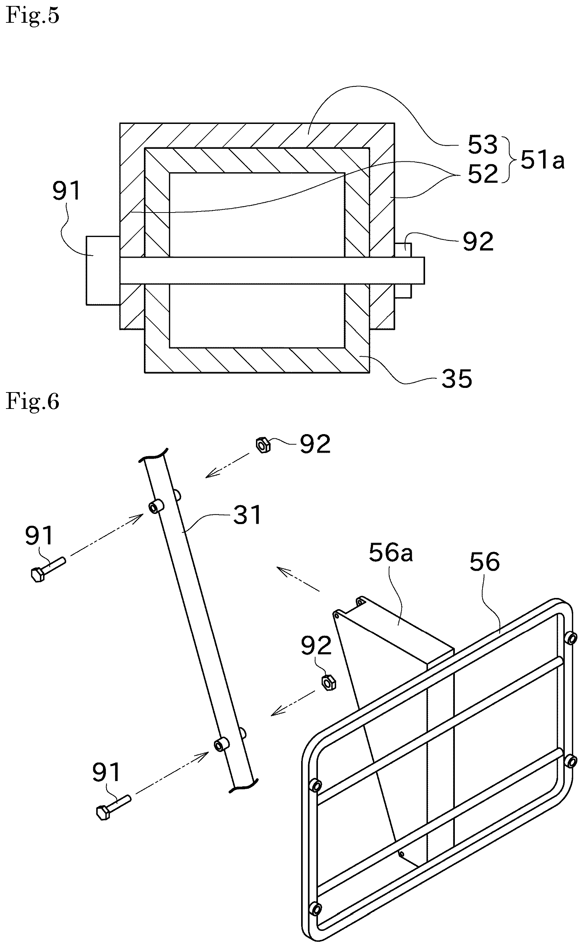

The left guide portion 52 is disposed to face the left side surface of the lower frame 35. The right guide portion 52 is disposed to face the right side surface of the lower frame 35. As shown in FIG. 4, the guide portion 52 has a plurality of through holes whose axial directions coincide with the left-right direction. The lower frame 35 also has a plurality of through holes formed at the same intervals as the guide portions 52 and whose axial directions coincide with the left-right direction. The attachment-detachment mechanism 51a is attached to the lower frame 35 by aligning the guide portion 52 with the through holes of the lower frame 35 and fastening them with a bolt 91 and a nut 92. FIG. 5 is a cross-sectional view showing the attachment-detachment mechanism 51a attached to the lower frame 35. By removing the bolts 91 and the nuts 92, the attachment-detachment mechanism 51a can be removed from the lower frame 35. As a result of the above, the placement portion 51 is detachably attached to the support frame 2 via the attachment-detachment mechanism 51a. The placement portion 51 is supported by the lower frame 35 located below the placement portion 51, and is thereby able to transmit the load from the luggage 100 to the lower frame 35 as a compressive load. This can increase the support rigidity of the placement portion 51. The placement portion 51 extends outward in the vehicle width direction beyond the lower frame 35 to which the placement portion 51 is attached.

As shown in FIG. 5, the connecting portion 53 connects the left guide portion 52 and the right guide portion 52 at their upper portions. The load of the luggage 100 may be transmitted to the guide portion 52 via the bolt 91 or to the connecting portion 53. The attachment-detachment mechanism 51 a has a shape that fits along the outer shape of the lower frame 35. The connecting portion 53 is not an essential component and can be omitted.

The standing wall portion 55 extends in the up-down direction when the luggage 100 is accommodated. The standing wall portion 55 faces at least a portion of the side of the luggage 100 and prevents the luggage 100 from falling or shifting out of position. In this specification, the term "wall" includes not only a flat plate-shaped member having a gap, but also a combination of a plurality of rod-shaped members, or a single rod-shaped member. The standing wall portion 55 has a travel direction standing wall portion 56 and a left-right direction standing wall portion 57. The standing wall portion 55 may extend upward from the placement portion 51, or may extend in the up-down direction from another portion. Either or both of the travel direction standing wall portion 56 and the left-right direction standing wall portion 57 may be omitted.

The travel direction standing wall portion 56 is a portion that receives at least one of the faces of the luggage 100 in the front-rear direction. In this embodiment, the travel direction standing wall portion 56 is a portion that receives the rear surface of the luggage 100. The travel direction standing wall portion 56 has a structure in which a rectangular frame-shaped member is combined with a rod-shaped member extending in the left-right direction. However, the structure of the travel direction standing wall portion 56 in this embodiment can be modified. For example, the travel direction standing wall portion 56 may be a plate-like member having a rectangular shape or another shape.

The travel direction standing wall portion 56 extends in the left-right direction from a center position in the vehicle width direction. Specifically, as shown in FIG. 2, the range in the left-right direction of the travel direction standing wall portion 56 overlaps with the range in the left-right direction of the left front wheel 3a and the right front wheel 3b in a front view. The travel direction standing wall portion 56 is disposed higher the upper ends of the left front wheel 3a and the right front wheel 3b in the height direction.

An attachment-detachment mechanism 56a is fixed to the rear surface of the travel direction standing wall portion 56 by a fixing means such as welding. As shown in FIG. 6, the attachment-detachment mechanism 56a has a plurality of through holes whose axial directions coincide with the left-right direction. The first head pipe 31 also has a plurality of through holes formed at the same intervals as the attachment-detachment mechanism 56a and whose axial directions coincide with the left-right direction. The attachment-detachment mechanism 56a is attached to the first head pipe 31 by aligning the positions of the through holes of the attachment-detachment mechanism 56a and the first head pipe 31 and fastening them with a bolt 91 and a nut 92. By removing the bolts 91 and the nuts 92, the attachment-detachment mechanism 56a can be removed from the first head pipe 31. As a result of the above, the travel direction standing wall portion 56 is detachably attached to the support frame 2 via the attachment-detachment mechanism 56a. The travel direction standing wall portion 56 extends outward in the vehicle width direction beyond the first head pipe 31 to which it is attached.

In this manner, the placement portion 51 and the standing wall portion 55 are supported by different frames. Specifically, the placement portion 51 is supported by the frame (the lower frame 35) that extends horizontally. The standing wall portion 55 is supported by the frame (first head pipe 31) that extends in the up-down direction.

The travel direction standing wall portion 56 may be detachably attached to the placement portion 51. In this case, the travel direction standing wall portion 56 is detachable from the support frame 2 via the placement portion 51. The travel direction standing wall portion 56 may be detachably attached to the lower frame 35 or another frame.

The left-right direction standing wall portion 57 is a portion that receives at least one of the faces of the luggage 100 in the left-right direction standing wall portion. The left-right direction standing wall portion 57 in this embodiment has a portion that receives the left side of the luggage 100 and a portion that receives the right side of the luggage 100. Each of the left-right direction standing wall portion 57 has two rod-shaped members. The longitudinal direction of the rod-shaped member of the left-right direction standing wall portion 57 includes both the up-down direction and the front-rear direction, and more specifically corresponds to the oblique direction rising to the rear. The left-right direction standing wall portion 57 is not limited to a rod-shaped member, and may include a frame-shaped member or a plate-shaped member.

An attachment-detachment mechanism 57a is fixed to each of both end of the longitudinal direction of the left-right direction standing wall portion 57 by a fixing means such as welding. The attachment-detachment mechanism 57a is a through hole into which a bolt 91 can be inserted. The axial direction of the attachment-detachment mechanism 57a on the side connected to the placement portion 51 coincides with the up-down direction. On the other hand, the placement portion 51 is formed with a screw hole whose axial direction coincides with the up-down direction. With this configuration, by aligning the attachment-detachment mechanism 57a with the through hole of the placement portion 51 and inserting and fastening the bolt 91, the left-right direction standing wall portion 57 is detachably attached to the placement portion 51 (more specifically, the outer end of the placement portion 51 in the vehicle width direction).

The axial direction of the attachment-detachment mechanism 57a on the side connected to the travel direction standing wall portion 56 coincides with the front-rear direction. On the other hand, the screw hole is formed in the travel direction standing wall portion 56, the axial direction of which coincides with the front-rear direction. With this configuration, by aligning the attachment-detachment mechanism 57a with the through hole of the travel direction standing wall portion 56 and inserting and fastening the bolt 91, the left-right direction standing wall portion 57 is detachably attached to the travel direction standing wall portion 56 (more specifically, the vehicle width directional outer end of the travel direction standing wall portion 56). The vehicle width direction outer ends of the placement portion 51 and the travel direction standing wall portion 56 are located outer in the vehicle width direction than the first steering arm 42. By removing the bolts 91, the left-right direction standing wall portion 57 can also be removed. As a result of the above, the left-right direction standing wall portion 57 is detachably attached to the support frame 2 via the placement portion 51 or the travel direction standing wall portion 56.

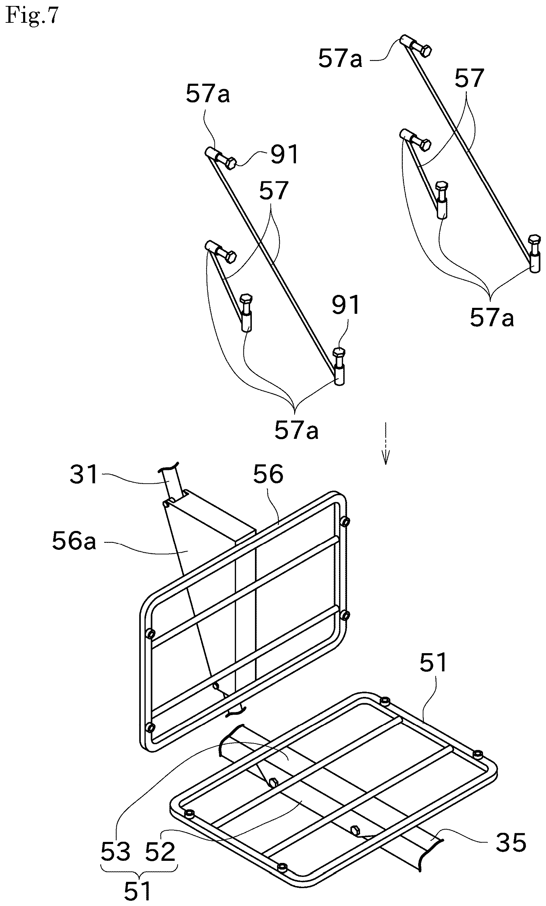

As shown in FIG. 7, with the placement portion 51 and the travel direction standing wall portion 56 attached to the support frame 2, the left-right direction standing wall portion 57 is attached. Alternatively, the storage frame 37 may be attached to the support frame 2 with the placement portion 51, the travel direction standing wall portion 56, and the left-right direction standing wall portion 57 assembled.

The left-right direction standing wall portion 57 may be configured to be attached only to the placement portion 51 and not to the travel direction standing wall portion 56. Conversely, the left-right direction standing wall portion 57 may be configured to be attached only to the travel direction standing wall portion 56 and not to be attached to the placement portion 51. Alternatively, the left-right direction standing wall portion 57 may be directly and detachably attached to a frame such as the lower frame 35 or the first head pipe 31.

In this embodiment, at least a portion of the storage frame 37 (in this embodiment, the entirety of the storage frame 37) is detachable from the support frame 2. With this configuration, the vehicle 1 can be transported with the storage frame 37 detached from the support frame 2. As described above, since the storage frame 37 has a large size in the left-right direction, the vehicle 1 can be transported in a compact state by removing the storage frame 37. As described above, the placement portion 51 is frame-shaped or plate-shaped, and therefore has a small thickness. Therefore, compared to other shapes, the shape of the placement portion 51 of this embodiment during transportation is compact.

The storage frame 37 of this embodiment can be disassembled into the placement portion 51 and the standing wall portion 55. Furthermore, the standing wall portion 55 can be separated into a travel direction standing wall portion 56 and a left-right direction standing wall portion 57. By disassembling the storage frame 37, the size of the storage frame 37 can be made compact. More specifically, the state in which the storage frame 37 is attached to the support frame 2 and can store the luggage 100 is referred to as the stored state. The state in which the storage frame 37 is removed from the support frame 2 and disassembled is referred to as a compact state. The size of the storage frame 37 in the compact state is smaller than the size of the storage frame 37 in the stored state. Therefore, the size of the storage frame 37 can be made compact for transportation. The placement portion 51 and the standing wall portion 55 may be capable of being displaced relative to each other while maintaining a connected state. Even in this case, the storage frame 37 can be deformed to make it compact. For example, the dimensions of the storage frame 37 can be reduced by deforming the storage frame 37 so that the surface of the placement portion 51 and the surface of the standing wall portion 55 face each other. As described above, the parallel link mechanism 20 and the front wheels 3 can also be removed from the support frame 2, making the vehicle 1 even more compact for transportation.

The placement portion 51 and the standing wall portion 55 may be integrally formed and cannot be removed. In this embodiment, both the travel direction standing wall portion 56 and the left-right direction standing wall portion 57 are detachable from the support frame 2, but only one of them may be detachable from the support frame 2. The method for detachably attaching the placement portion 51 and the standing wall portion 55 to the support frame 2 is not limited to bolts. The lower frame 35 is not limited to a member having a rectangular cross section, and may have a circular or elliptical cross section. If a member for preventing movement of the luggage 100 stored in the storage space, such as a rubber band, is provided, the standing wall portion 55 does not need to be provided. In the case where the movement of the luggage 100 is restricted by inclining the placement portion 51, the structure may be such that the standing wall portion 55 is provided only at a position on the lower side of the inclined surface.

The placement portion 51 being parallel to the horizontal surface is just an example, and the placement portion 51 may be inclined relative to the horizontal surface. The standing wall portion 55 being parallel to the vertical direction is just an example, and the standing wall portion 55 may be inclined with respect to the vertical direction. For example, the placement portion 51 may be inclined upward toward the front. In other words, the front end of the placement portion 51 may be located higher than the rear end of the placement portion 51. The standing wall portion 55 may be inclined downward toward the front. In other words, the lower end of the standing wall portion 55 may be located forward of the upper end of the standing wall portion 55. For example, the standing wall portion 55 may be disposed along the first head pipe 31. As a result, the luggage 100 receives a rearward force due to its own weight, and the rear surface of the luggage 100 can be received by the standing wall portion 55, so that the luggage 100 is unlikely to fall.

Next, a vehicle 1 according to a second embodiment will be described. In the following description, the same or similar components as those in the above embodiment are denoted by the same reference numerals in the drawings, and descriptions thereof may be omitted. Some of the features of the first embodiment and some of the features of the second embodiment may be combined.

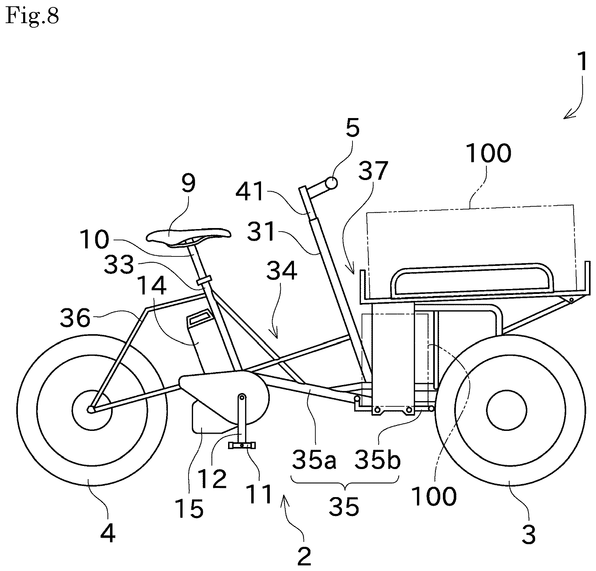

As shown in FIG. 8, the lower frame 35 of the second embodiment includes a rear portion 35a that slopes downward toward the front, and a front portion 35b that is located forward of the rear portion 35a. The longitudinal direction of the front portion 35b is parallel to the horizontal direction, and includes upper and lower portions. The storage frame 37 of the second embodiment may be attached to the lower frame 35 of the first embodiment, or the storage frame 37 of the first embodiment may be attached to the lower frame 35 of the second embodiment.

As shown in FIG. 8, the storage frame 37 of the second embodiment is formed with the storage space divided into upper and lower spaces. The upper storage space is formed at a position higher than the lower frame 35 and higher than the upper ends of the front wheels 3 in the up-down direction. **In** the front-rear direction, the upper storage space is formed in a position forward of the first head pipe 31 and in an area overlapping with the front wheels 3. The lower storage space is formed at a lower position than the upper storage space in the up-down direction and at a lower position than the seat 9. The lower storage space is formed in a range overlapping with the upper storage space in the front-rear direction and also overlapping with the front wheels 3. A portion of each storage space is open, and luggage 100 can be put in and taken out through the open portion. The upper storage space is, for example, open at the top. The lower storage space is open on the front and rear sides at a position higher than a lower placement portion. The lower storage space may be located forward of the first head pipe 31 in the front-rear direction, or may overlap with the first head pipe 31. The features of the positional relationships described above are each individual features, and even if only one of the positional relationships is used, it is possible to achieve an effect corresponding thereto.

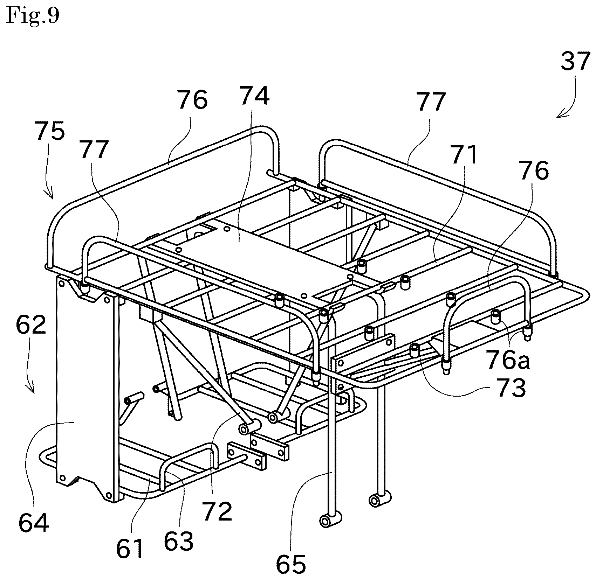

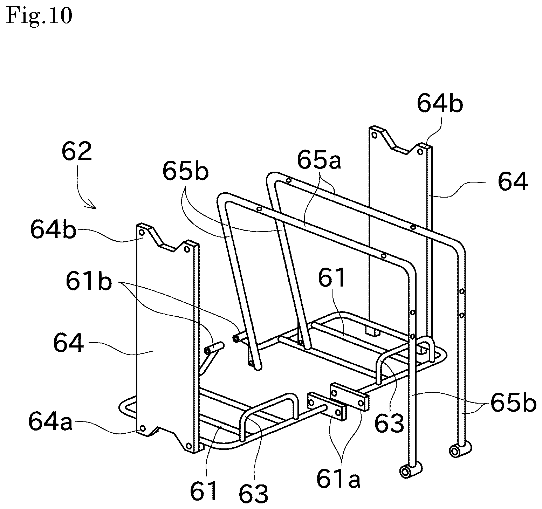

**In** FIG. 9, the storage frame 37 is shown. First, with reference to FIG. 10, the members of the storage frame 37 that form the lower storage space will be described. The storage frame 37 includes a lower placement portion 61, a lower standing wall portion 62, and a central frame 65.

The lower placement portion 61 supports the lower part of the luggage 100 in a storage state where the luggage 100 is stored. The lower placement portion 61 are provided in two sections, separated on the left and right sides with the center position in the vehicle width direction. **In** other words, the lower placement portion 61 is provided in two portions, one on the left side and one on the right side with the first head pipe 31 in between. As in the first embodiment, the lower placement portion 61 overlaps both the left front wheel 3a and the right front wheel 3b when viewed from the front. The left lower placement portion 61 and the right lower placement portion 61 are separated by a central frame 65 and the first head pipe 31. The lower placement portion 61 has a structure in which a rectangular frame-shaped member is combined with a rod-shaped member extending in the front-rear direction, but may have another structure as described in the first embodiment. The lower placement portion 61 may be configured as a single unit disposed at the center position in the vehicle width direction, instead of being separated into left and right.

By arranging the lower placement portion 61 separately on the left and right, it is possible to enlarge the lower storage space while avoiding interference with the members arranged between them. For example, in this embodiment, when viewed from the side, the lower placement portion 61 overlaps with the first head pipe 31, but interference with the first head pipe 31 is suppressed by dividing the lower placement portion 61 into two in the vehicle width direction. The configuration of expanding the storage space by arranging two placement portions with a gap between them in the vehicle width direction is not limited to the lower storage space in the second embodiment, but can be applied to various storage spaces, such as the storage space in the first embodiment and the upper storage space in the second embodiment.

A first attachment-detachment mechanism 61a is fixed by welding or the like to the front end of the lower placement portion 61, which is the end portion on the center side in the vehicle width direction. A second attachment-detachment mechanism 61b is fixed by welding or the like to the rear end of the lower placement portion 61, which is the end portion on the center side in the vehicle width direction. The first attachment-detachment mechanism 61a and the second attachment-detachment mechanism 61b have through holes formed therein. The lower frame 35 has screw holes formed at positions corresponding to these through holes. With this configuration, the first attachment-detachment mechanism 61a and the second attachment-detachment mechanism 61b are attachable to and detachable from the lower frame 35. This makes the lower placement portion 61 detachable from the support frame 2.

The lower standing wall portion 62 extends in the up-down direction when the luggage 100 is stored. The lower standing wall portion 62 faces at least a portion of the side of the luggage 100 and prevents the luggage 100 from falling or shifting out of position. The lower standing wall portion 62 includes a lower travel direction standing wall portion 63 and a lower left-right direction standing wall portion 64. The lower standing wall portion 62 may extend upward from the lower placement portion 61, or may extend in the up-down direction from another portion. Either or both of the lower travel direction standing wall portion 63 and the lower left-right direction standing wall portion 64 may be omitted.

The lower travel direction standing wall portion 63 is a portion that receives at least one of the faces of the luggage 100 in the front-rear direction. In this embodiment, the lower travel direction standing wall portion 63 is a portion that receives the front surface of the luggage 100. The lower travel direction standing wall portion 63 has a structure in which a single rod-shaped member is bent, but may have another structure as described in the first embodiment.

The lower travel direction standing wall portion 63 is inserted into the lower placement portion 61, whereby the lower travel direction standing wall portion 63 is attached to the lower placement portion 61. The lower travel direction standing wall portion 63 may be detachable or non-detachable.

The lower left-right direction standing wall portion 64 is a portion that receives at least one of the faces of the luggage 100 in the left-right direction standing wall portion. The lower left-right direction standing wall portion 64 in this embodiment is a portion that receives the outer side surface of the luggage 100 in the vehicle width direction. The lower left-right direction standing wall portion 64 is a plate-shaped member, but may have another structure as described in the first embodiment.

A first attachment-detachment mechanism 64a is provided at the lower end of the lower left-right direction standing wall portion 64, and a second attachment-detachment mechanism 64b is provided at the upper end of the lower left-right direction standing wall portion 64. The first attachment-detachment mechanism 64a and the second attachment-detachment mechanism 64b are through holes into which a bolt can be inserted. The lower placement portion 61 has a screw hole formed at a position corresponding to the through hole of the first attachment-detachment mechanism 64a. An upper placement portion 71, which will be described later, has a screw hole formed at a position corresponding to the through hole of the second attachment-detachment mechanism 64b. With this configuration, the lower left-right direction standing wall portion 64 is detachable. Since the lower placement portion 61 and the upper placement portion 71 are detachable from the support frame 2, the lower left-right direction standing wall portion 64 is also detachable from the support frame 2.

The lower left-right direction standing wall portion 64 also functions to connect the lower placement portion 61 and the upper placement portion 71 to increase rigidity. However, the lower left-right direction standing wall portion 64 may not be connected to the upper placement portion 71.

The central frame 65 is a frame that supports the members that form the upper storage space. The central frame 65 includes a horizontal portion 65a and an upright portion 65b. The horizontal portion 65a is a portion that extends in the horizontal direction and is a portion that receives the members that constitute the upper storage space. The upright portion 65b is connected to the horizontal portion 65a and extends in the height direction. The upright portion 65b is attached to the support frame 2, specifically, to the first head pipe 31 and the lower frame 35.

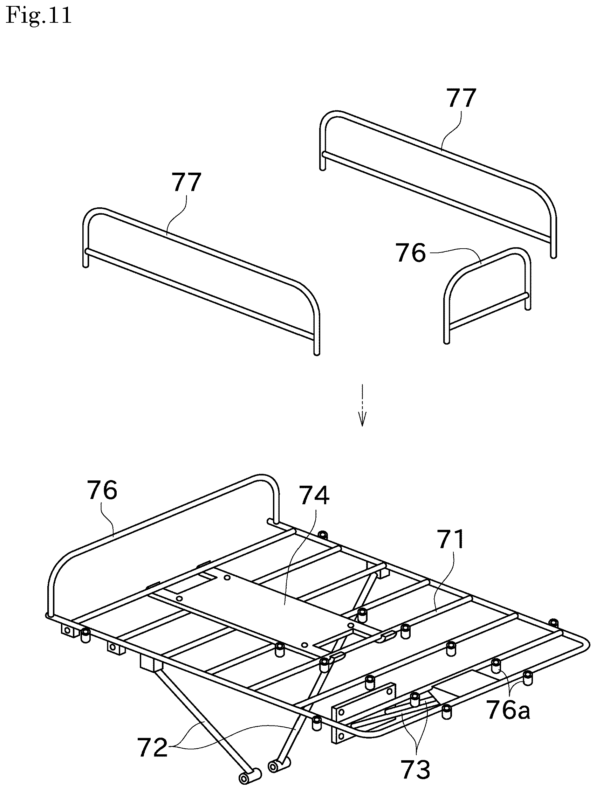

Next, with reference to FIG. 11, the members of the storage frame 37 that form the upper storage space will be described. The storage frame 37 includes an upper placement portion 71 and an upper standing wall portion 75.

The upper placement portion 71 supports the lower part of the luggage 100 in a storage state where the luggage 100 is stored. The upper placement portion 71 is provided so as to extend from the center position in the vehicle width direction to the left and right sides. The upper placement portion 71 has a structure in which a rectangular frame-shaped member is combined with a rod-shaped member extending in the left-right direction, but may have another structure as described in the first embodiment. The upper placement portion 71 may be configured to be separated into left and right sections. Although the upper placement portion 71 is substantially parallel to the horizontal surface, it is slightly inclined in the front-rear direction with respect to the horizontal surface. Specifically, the upper placement portion 71 is inclined upward so that the front end thereof is higher than the rear end thereof. This makes it possible to make it difficult for the luggage 100 placed on the upper placement portion 71 to fall forward from the upper placement portion 71.

The first head pipe 31 of the second embodiment is inclined downward toward the front, similarly to the first embodiment. Therefore, the storage space is likely to be narrower than when the first head pipe 31 is parallel to the vertical direction. In order to ensure a large storage space with this layout, the upper placement portion 71 extends relatively far forward. In detail, the front end of the upper placement portion 71 is located forward and above the upper end of the front wheel 3.

In order to increase the size of the upper storage space in the vehicle width direction, the upper placement portion 71 also extends long in the left-right direction. Specifically, the upper placement portion 71 is configured to realize at least one of the positional relationships defined below. That is, in terms of positional relationship in the vehicle width direction, the end of the upper placement portion 71 in the vehicle width direction is located outside the upper arm 21 and the lower arm 22 in the vehicle width direction. The end portion in the vehicle width direction of the upper placement portion 71 is located outside in the vehicle width direction relative to the inner surface of the front wheels 3 when steering or traveling straight. The end portion in the vehicle width direction of the upper placement portion 71 is located outside the pedal 11 in the vehicle width direction. The end portion of the upper placement portion 71 in the vehicle width direction may be the component located at the outermost position in the vehicle width direction of the vehicle 1, or may be the component located at the outermost position in the vehicle width direction of all the components excluding the steering handle 5.

The upper placement portion 71 has a support structure including a first support arm 72, a second support arm 73, and a support plate 74. The first support arms 72 are provided in a pair on the left and right sides and connect the ends of the upper placement portion 71 in the vehicle width direction to the support frame 2. Therefore, the upper end of the first support arm 72 is located outboard in the vehicle width direction relative to the lower end of the first support arm 72. The first support arm 72 is connected by a bolt and is detachable. The second support arm 73 connects the front end of the upper placement portion 71 to the central frame 65 (more specifically, the front upright portion 65b). The second support arm 73 is connected by a bolt and is detachable. The support plate 74 is a plate-like member disposed along the placing surface of the upper placement portion 71. The support plate 74 connects the placing surface of the upper placement portion 71 to the central frame 65 (more specifically, the front horizontal portion 65a). The support plate 74 is connected by bolts and is detachable. As described above, all of the support structures of the upper placement portion 71 are detachable and supported by the support frame 2. Therefore, the upper placement portion 71 is supported by the support frame 2 and is detachable from the support frame 2.

The upper standing wall portion 75 extends in the up-down direction when the luggage 100 is stored. The upper standing wall portion 75 faces at least a portion of the side of the luggage 100 and prevents the luggage 100 from falling or shifting out of position. The upper standing wall portion 75 includes a upper travel direction standing wall portion 76 and a upper left-right direction standing wall portion 77. The upper standing wall portion 75 may extend upward from the upper placement portion 71, or may extend in the up-down direction from another portion. Either or both of the upper travel direction standing wall portion 76 and the upper left-right direction standing wall portion 77 may be omitted.

The upper travel direction standing wall portion 76 is a portion that receives at least one of the faces of the luggage 100 in the front-rear direction. The upper travel direction standing wall portion 76 in this embodiment is a portion that receives the front surface and the rear surface of the luggage 100, respectively. The upper travel direction standing wall portion 76 has a structure in which one or two rod-shaped members are combined, but may have another structure as described in the first embodiment.

As shown in FIG. 11, the rear upper travel direction standing wall portion 76 is fixed to the upper placement portion 71. On the other hand, the front upper travel direction standing wall portion 76 is detachable from the upper placement portion 71. Specifically, the lower end of the upper travel direction standing wall portion 76 is inserted into a receiving portion 76a provided on the upper placement portion 71, thereby attaching the upper travel direction standing wall portion 76 to the upper placement portion 71. Since the upper placement portion 71 has a plurality of sets of receiving portions 76a arranged in the front-rear direction, the mounting position of the upper travel direction standing wall portion 76 in the front-rear direction can be changed. This allows the luggage 100 to be stably stored by changing the mounting position of the upper travel direction standing wall portion 76 depending on the size of the luggage 100. The rear upper travel direction standing wall portion 76 may be attachable or detachable to the upper placement portion 71 (and the mounting position in the front-rear direction may be changeable), or the front upper travel direction standing wall portion 76 may not be attachable or detachable to the upper placement portion 71.

The upper left-right direction standing wall portion 77 is a portion that receives at least one of the faces of the luggage 100 in the left-right direction standing wall portion. The upper left-right direction standing wall portion 77 in this embodiment is a portion that receives the outer side surface of the luggage 100 in the vehicle width direction. The upper left-right direction standing wall portion 77 has a structure in which one or two rod-shaped members are combined, but may have another structure as described in the first embodiment.

As shown in FIG. 11, the upper left-right direction standing wall portion 77 is detachable from the upper placement portion 71. Specifically, the lower ends of the upper left-right direction standing wall portion 77 is inserted into the upper placement portion 71, thereby attaching the upper left-right direction standing wall portion 77 to the upper placement portion 71. The upper left-right direction standing wall portion 77 may be non-detachable from the upper placement portion 71.

In this embodiment, at least a portion of the storage frame 37 (in this embodiment, the entirety of the storage frame 37) is detachable from the support frame 2. With this configuration, the vehicle 1 can be transported with the storage frame 37 detached from the support frame 2. As described above, since the storage frame 37 has a large size in the left-right direction, the vehicle 1 can be transported in a compact state by removing the storage frame 37. By disassembling the storage frame 37 removed from the support frame 2, the vehicle 1 can be transported in an even more compact state.

The specific configuration of the vehicle 1 of the second embodiment is as follows.
[Configuration 1] The storage frame 37 defines the upper storage space for storing luggage 100 and the lower storage space that is located lower than the upper storage space. This allows the luggage 100 to be stored efficiently.
[Configuration 2] With configuration 1 as a basis, two lower storage spaces are formed on the left and right sides of the center position in the vehicle width direction. This allows the luggage 100 to be stored efficiently and in a balanced manner while utilizing the center position in the vehicle width direction for purposes other than placing the luggage 100.
[Configuration 3] With configuration 2 as a basis, members supporting the upper storage space (central frame 65, first support arm 72) are provided between the members forming the left and right lower storage spaces in the left-right direction. This allows the center position in the vehicle width direction to be utilized for supporting the members that form the upper storage space.
[Configuration 4] With configuration 1 as a basis, a member (lower left-right direction standing wall portion 64) is provided to connect the member forming the upper storage space (upper placement portion 71) and the member forming the lower storage space (lower placement portion 61). This can increase the rigidity.
[Configuration 5] The upper storage space is located at a position higher than the upper end of the front wheel 3, and the lower storage space includes a position lower than the upper end of the front wheel 3. The front end of the upper storage space is located forward of the front end of the lower storage space. This allows luggage 100 to be placed above the front wheels 3.
[Configuration 6] With configuration 5 as a basis, a member (central frame 65) that supports the upper storage space is provided in front of the lower storage space. This makes it possible to utilize the front of the lower storage space to support the members that form the upper storage space.

(Feature 1) The vehicle 1 in the above embodiment includes the front wheel 3, the rear wheel 4, the steering handle 5, the first head pipe 31, the support frame 2, and the storage frame 37. The first steering shaft 41 that rotates integrally with the steering handle 5 is inserted into the first head pipe 31. The first head pipe 31 is disposed so that the lower end thereof is located forward of the upper end thereof. The support frame 2 supports the front wheel 3 and the rear wheel 4. The storage frame 37 forms the storage space for storing luggage 100, and is at least partially detachable from the support frame 2.

This allows the vehicle 1 to be transported in a compact state with the storage frame 37 detached from the support frame 2. For example, the vehicle can be transported in a state where the size in the vehicle width direction is reduced. This reduction in space required for transportation allows more support frames to fit into a container or truck. In the above embodiment, the storage space exists in front of the first head pipe 31. Furthermore, the lower end of the first head pipe 31 is located forward of the upper end of the first head pipe 31. In other words, since the steering handle 5 can be disposed rearward, it is easier to make the storage space in front of the first head pipe 31 larger.

(Feature 2) In the vehicle 1 of the above embodiment, the storage frame 37 is a three-dimensional structure having placement portion (placement portion 51, lower placement portion 61, upper placement portion71, the same below) that support the lower part of the luggage 100 when the luggage 100 is stored in the storage space, and standing wall portion (standing wall portion 55, lower standing wall portion 62, upper standing wall portion 75, the same below) that extend in the up-down direction. The placement portion or the standing wall portion is detachable from the support frame 2.

By removing the placement portion or the standing wall portion from the support frame, the vehicle 1 can be transported in a compact state with reduced protrusion of the placement portion or the standing wall portion relative to the support frame.

(Feature 3) In the vehicle 1 of the above embodiment, the standing wall portion has the travel direction standing wall portion that extends in the up-down direction at the rear of the storage space. The travel direction standing wall portion is detachable from the support frame 2.

This makes it difficult for the luggage 100 to fall backwards. Since the travel direction standing wall portion is detachable, the container can be transported in a compact state.

(Feature 4) **In** the vehicle 1 of the above embodiment, the placement portion has the upper placement portion 71. The front end of the upper placement portion 71 is located above the upper end of the front wheel 3 and forward of the upper end of the front wheel 3. The upper placement portion 71 is detachable from the support frame 2.

This reduces interference with the front wheels 3, making it possible to increase the storage space of the upper placement portion 71. Since the upper placement portion 71 is detachable, it can be transported in a compact state.

(Feature 5) **In** the vehicle 1 of the above embodiment, the storage space is a space that is open on the upper side.

This allows the luggage 100 to be stored in and removed from the storage space from above.

(Feature 6) In the vehicle 1 of the above embodiment, both the placement portion and the standing wall portion are detachable from the support frame 2.

By removing both the placement portion and the standing wall portion from the support frame 2, the vehicle 1 can be transported in a more compact state with reduced protrusion of both the placement portion and the standing wall portion relative to the support frame 2.

(Feature 7) In the vehicle 1 of the above embodiment, the standing wall portion has a plurality of standing wall portions (travel direction standing wall portion 56, left-right direction standing wall portion 57, lower travel direction standing wall portion 63, lower left-right direction standing wall portion 64, upper travel direction standing wall portion 75, upper left-right direction standing wall portion 77, the same below) extending in the up-down direction from a plurality of positions. The placement portion and the multiple standing wall portions are detachable from the support frame 2.

By removing the placement portion and the multiple standing wall portions from the support frame 2, the vehicle can be transported in a more compact state with less protrusion of the multiple standing wall portions from the support frame 2.

(Feature 8) In the vehicle 1 of the above embodiment, the vertical wall portion has travel direction standing wall portions (travel direction standing wall portion 56, lower travel direction standing wall portion 63m upper travel direction standing wall portion 76) that are detachable from the support frame 2 and support at least one surface in the front-rear direction of the luggage 100.

Since not only the placement portion but also the travel direction standing wall portion in the traveling direction are detachable, by removing the placement portion and the travel direction standing wall portion, the vehicle can be transported in the even more compact state.

(Feature 9) In the vehicle 1 of the above embodiment, the standing wall portion 55 has the left-right direction standing wall portion (left-right direction standing wall portion 57, lower left-right direction standing wall portion 64, and upper left-right direction standing wall portion 77) that are attachable to and detachable from the support frame 2 and support the left and right surfaces of the luggage 100.

Since not only the placement portion but also the left-right direction standing wall portion in the traveling direction are detachable, by removing the placement portion and the left-right direction standing wall portion, the vehicle can be transported in the even more compact state.

(Feature 10) The vehicle 1 of this embodiment includes the left front wheel 3a and the right front wheel 3b as the front wheels. When viewed from the front, the placement portion 51 and the lower placement portion 61 overlap both the left front wheel 3a and the right front wheel 3b.

Since the size of the placement portion in the vehicle width direction is large, the effect of compactness achieved by being removable can be utilized even more effectively.

(Feature 11) In the vehicle 1 of the above embodiment, the storage frame 37 has a pair of guide portions 52 respectively facing left and right side surfaces of the support frame 2, and a connecting portion 53 connecting the pair of guide portions 52 in the left-right direction.

The storage frame and the support frame can be attached and detached with the storage frame guided by the guide portion to the support frame, thereby facilitating the attachment and detachment operation.

(Feature 12) In the vehicle 1 of the above embodiment, the support frame 2 includes a lower frame 35 that extends in the front-rear direction at a position lower than the upper ends of the front wheel 3 and the rear wheel 4. The storage frame 37 is detachable from the lower frame 35.

This allows the vehicle to have a lower center of gravity while providing a large storage space, and also reduces the space required for transporting the vehicle.

## Claims

1. A vehicle (1) comprising:
a front wheel (3);
a rear wheel (4);
a steering handle (5);
a head pipe (31) into which a steering shaft (41, 43) that rotates integrally with the steering handle (5) is inserted and which is disposed so that a lower end of the head pipe (31) is positioned forward of an upper end of the head pipe (31);
a support frame (2) which supports the front wheel (3) and the rear wheel (4); and
a storage frame (37) which forms a storage space for storing luggage (100) and which is at least partially detachable from the support frame (2).

2. The vehicle (1) according to claim 1, wherein
the storage frame (37) has a three-dimensional structure including a placement portion that supports a lower portion of the luggage (100) in a storage state in which the luggage (100) is stored, and a standing wall portion that extends in a up-down direction, and
the placement portion or the standing wall portion is detachable from the support frame (2).

3. The vehicle (1) according to claim 2, wherein
the standing wall portion has a travel direction standing wall portion that extends in the up-down direction at the rear of the storage space, and
the travel direction standing wall portion is detachable from the support frame (2).

4. The vehicle (1) according to claim 2 or 3, wherein
the placement portion has an upper placement portion,
a front end of the upper placement portion is located above an upper end of the front wheel (3) and forward of the upper end of the front wheel (3), and
the upper placement portion is detachable from the support frame (2).

5. The vehicle (1) according to any one of claims 1 to 4, wherein
the storage space is a space with an open top.

6. The vehicle (1) according to claim 2 or 3, wherein
both the placement portion and the standing wall portion are detachable from the support frame (2).

7. The vehicle (1) according to claim 2 or 3, wherein
the standing wall portion includes a plurality of extending standing wall portions each extending in the up-down direction from a plurality of positions, and
both the placement portion and the plurality of the standing walls are detachable from the support frame (2).

8. The vehicle (1) according to claim 6 or 7, wherein
the standing wall portion has a travel direction standing wall portion which is detachable from the support frame (2) and receives at least one surface of a front-rear direction of the luggage (100).

9. The vehicle (1) according to claim 6 or 7, wherein
the standing wall portion has a left-right direction standing wall portion which is detachable from the support frame (2) and receives a side surface in left-right direction of the luggage (100).

10. The vehicle (1) according to claim 2 or 3, further comprising,
a left front wheel (3a) and a right front wheel (3b) as the front wheels (3), wherein
in a front view, the placement portion overlaps both the left front wheel (3a) and the right front wheel (3b).

11. The vehicle (1) according to any one of claims 1 to 10, wherein
the storage frame (37) has a pair of guide portions (52) respectively facing left and right side surfaces of the support frame (2), and a connecting portion connecting the pair of guide portions (52) in a left-right direction.

12. The vehicle (1) according to any one of claims 1 to 11, wherein
the support frame (2) includes a lower frame (35) extending in a front-rear direction at a position lower than upper ends of the front wheel (3) and upper ends of the rear wheel (4), and
the storage frame (37) is detachable from the lower frame (35).

13. A storage frame (37) that is detachable from a vehicle (1) and forms a storage space for storing luggage (100), wherein
the storage frame (37) is switchable between a storage state in which the storage space is formed and a compact state in which an outer shape is smaller than that of the storage frame (37) in the storage state.
